# EUROPÄISCHE PATENTSCHRIFT

(11) **EP 1 947 755 B1**
(45) Veröffentlichungstag und Bekanntmachung des Hinweises auf die Patenterteilung: **18.11.2009**
(21) Anmeldenummer: 07001128.3
(22) Anmeldetag: 19.01.2007
(51) Int. Cl.: H02K 3/34, H02K 3/28, H02K 3/32

(54) **Stator einer elektrischen Maschine**
Stator of an electric machine
Stator d'une machine électrique

(43) Veröffentlichungstag der Anmeldung: 23.07.2008
(73) Patentinhaber: ENGEL Elektroantriebe GmbH, 65396 Walluf (DE)
(72) Erfinder: Preußer, Ortwin, 65399 Kiedrich (DE); Tröschel, Olaf, 65197 Wiesbaden (DE); Gath, Achille, 65385 Rüdesheim (DE)
(74) Vertreter: Quermann, Helmut

(56) Entgegenhaltungen:
- EP-A- 1 638 188
- EP-A2- 0 748 025
- DE-A1- 2 021 916
- DE-A1- 10 258 218
- JP-A- 2002 044 894
- US-A- 5 306 976

## Beschreibung

Die Erfindung betrifft einen Stator einer elektrischen Maschine, wobei das Wicklungssytem des Stators aus Zahnspulen aufgebaut ist.

Aus der Praxis (Drehstrom-Synchronantrieb Baureihe HLR der Firma ENGEL Elektroantriebe GmbH) ist ein Drehstrom-Synchronantrieb bekannt. Bei diesem ist das Wicklungssystem des Stators aus Zahnspulen aufgebaut. Der Stator weist ein aus ferromagnetischem Material bestehendes Statorteil und, im Bereich von zwei Stirnseiten des Statorteils, zwei aus Isolierwerkstoff bestehende Endscheiben auf. Das Statorteil und die Endscheiben weisen Zähne mit dazwischen befindlichen Nuten auf. In jeder Nut sind Spulenabschnitte benachbarter Zahnspulen angeordnet. Die jeweilige Nut des Statorteils ist mit einer Nutisolierung versehen. Es ist ferner eine Phasenisolierung vorgesehen, die zwischen den in der jeweiligen Nut angeordneten Spulenabschnitten positioniert ist. Diese Phasenisolierung wird geschaffen, indem entweder dünnwandige Plättchen aus Isolierwerkstoff zwischen die Spulenabschnitte eingeführt werden oder aber die von den Spulenabschnitten nicht eingenommenen Nutbereiche mit einem Isolationsmaterial verfüllt werden.

Das Verfüllen mit Isolationsmaterial ist aufwendig und findet deshalb vorzugsweise in der Großserienfertigung Verwendung. Die Phasenisolierung mittels zwischen den Spulenabschnitten angeordneter Plättchen ist unzureichend, einerseits deshalb, weil diese Phasenisolierung nicht sicher genug ist und damit ein Kurzschluss der benachbarten Zahnspulen nicht ausgeschlossen werden kann und im übrigen der Nachteil nicht klar definierter Kriech- und Luftstrecken zu verzeichnen ist.

Servomotoren, die in Zahnspulentechnik gestaltet sind, sind ferner aus der Zeitschrift IEE, 51. Jahrgang, 02-2006, Seiten 36 bis 38 bekannt.

Ein Nadelwickelautomat zum Wickeln der Zahnspulen eines Stators einer elektrischen Maschine ist durch die ATS Wickel- und Montagetechnik, CH-5436 Würenlos, unter der Typenbezeichnung AWS-747/748 bekannt geworden.

Ein Stator einer elektrischen Maschine, der die Merkmale des Oberbegriffs des Patentanspruchs 1 aufweist, ist aus der DE 102 58 218 A1 bekannt. Bei diesem ist der Stator aus einer Vielzahl von Polsegmenten zusammengebaut. Das jeweilige Polsegment weist einen Polschenkel mit zwei großen, sich gegenüberliegenden Seitenflächen und zwei kleinen, sich gegenüberliegenden Endflächen auf. Mittels eines flächigen Isoliermaterialstücks wird der jeweilige Polschenkel zunächst isoliert. Dies erfolgt durch Ankleben jeweils eines flächigen Isoliermaterialstücks an wenigstens den beiden großen Seitenflächen des Polschenkels. Anschließend erfolgt das Wickeln einer elektrischen Spule um den isolierten Polschenkel herum. Dann wird, zum Ankleben der beiden Isoliermaterialstücke an diesem Polschenkel, ein Heißkleber auf die beiden großen Seitenflächen des Polschenkels oder auf die beiden Isoliermaterialstücke aufgebracht und die Isoliermaterialstücke an die großen Seitenflächen angelegt und angedrückt. Während des Andrückens der beiden Isoliermaterialstücke wird der Heißkleber durch Erwärmung klebfähig gemacht, um so zwischen den beiden Isoliermateriaistücken und dem Polsegment eine Heißklebeverbindung herzustellen.

In der EP-A-1 638 188 ist ein Stator einer elektrischen Maschinen beschrieben, bei dem die Fasentrennung mittels eines stabförmigen Trennkörpers erfolgt. Dieser Trennkörper weist eine U-Form auf.

Aufgabe der vorliegenden Erfindung ist es, einen Stator einer elektrischen Maschine, bei dem das Wicklungssytem aus Zahnspulen aufgebaut ist, so weiter zu bilden, dass bei baulicher einfacher Gestaltung eine optimale Nut- und Phasenisolierung gewährleistet ist. Der Stator soll überdies modular für unterschiedliche Leistungsstufen der Maschine aufbaubar sein.

Gelöst wird die Aufgabe durch einen Stator, der gemäß der Merkmale des Patentanspruchs 1 ausgebildet ist. Bei diesem wird als wesentlich angesehen, dass die Phasenisolierung der jeweiligen Nut als aus Isolierwerkstoff bestehender stabförmiger Trennkörper mit T-förmigem Querschnitt ausgebildet ist, der sich über die Länge der Nut erstreckt, wobei der Trennkörper einen Quersteg und einen mit der Mitte des Querstegs verbundenen Längssteg aufweist, sowie der Quersteg die radiale Nutöffnung abdeckt und der Längssteg zwischen den Spulenabschnitten der benachbarten Zahnspulen angeordnet ist.

Aufgrund dieser Gestaltung wird die Nut in zwei Teilräume unterteilt, wobei das Innere des jeweiligen Raumes vollständig isoliert ist. Diese Isolierung geschieht durch die Nutisolierung und die Phasenisolierung, wobei der Trennkörper im Nutinneren isolierte Wandungsbereiche schafft, die die Phasenisolierung darstellen, welche unmittelbar an die Nutisolierung angrenzt. In diesem Zusammenhang wird es als besonders vorteilhaft angesehen, wenn der Quersteg die radiale Nutöffnung abdeckt und hierbei die Nutisolierung überlappt. Grundsätzlich würde es ausreichen, die Nut- und Phasenisolierung auf Stoß anzuordnen.

Bevorzugt ist ein Elektromotor, insbesondere ein Drehstrom-Synchronantrieb, mit dem erfindungsgemäßen Stator versehen. Die Zähne des Stators sind insbesondere mit deren freien Zahnenden radial nach innen gerichtet angeordnet.

Das Statorteil ist vorzugsweise als Blechpaket ausgebildet. Eine Vielzahl sogenannter Elektrobleche werden miteinander verbunden, beispielsweise verschweißt, vernietet oder verklebt und bilden so das Statorteil. Insbesondere diese Ausbildung des Statorteils ermöglicht einen einfachen modularen Aufbau des Stators und damit eine Verwendung der elektrischen Maschine für unterschiedliche Leistungsstufen. Der modulare Aufbau ist auch deshalb besonders einfach möglich, weil nur wenige Einzelteile des Stators geändert bzw. vorgehalten werden müssen, um unterschiedliche Baulängen des Stators zu erzeugen. So kann bei unterschiedlichen Leistungsstufen auf dieselben Endscheiben, dieselbe Nutisolierung und dieselbe Phasenisolierung zurückgegriffen werden. Bezüglich der Nutisolierung und der Phasenisolierung ist es nur erforderlich, die hierbei verwendeten Teile auf die gewünschte Länge zu kürzen. Das Einstellen eines Nadelwickelautomaten auf unterschiedliche Wickellängen ist unproblematisch.

Gemäß einer bevorzugten Weiterbildung der Erfindung ist vorgesehen, dass mindestens die jeweils benachbarter Zähne des Statorteils im Bereich der freien Enden der Zähne aufeinander zu gerichtete Vorsprünge aufweisen, wobei der Trennkörper mit seinem Querschnitt die Vorsprünge auf deren dem Nutgrund zugewandten Seite oder die Nutisolierung im Bereich der Vorsprünge kontaktiert. Aufgrund des Hintergriffs des jeweiligen Trennkörpers ist dieser eindeutig zwischen den Vorsprüngen und dem Nutgrund sowie den Spulenabschnitten der benachbarten Zahnspulen positioniert. Eine Lageveränderung des Trennkörpers ist damit allenfalls in Achsrichtung des Stators möglich. Aufgrund der besonderen Gestaltung der Phasenisolierung innerhalb des Trennkörpers besteht aber die Möglichkeit, die Zahnspulen maximal zu bewickeln, wobei vor dem Montieren des Trennkörpers sich die Drähte der benachbarten Spulenabschnitte durchaus berühren können. Beim Positionieren der Phasenisolierung, somit des Trennkörpers, wobei der Trennkörper vorzugsweise in Längsrichtung des Stators eingeschoben wird, drückt der Längssteg des Trennkörpers die Drähte der unterschiedlichen Zahnspulen zurück, so dass der Trennkörper geklemmt zwischen den Spulenabschnitten benachbarter Zahnspulen gehalten ist.

Es wird als vorteilhaft angesehen, wenn der Längssteg des jeweiligen Trennkörpers in der diesem Trennkörper zugeordneten Nut die Nutisolierung im Bereich des Nutgrunds kontaktiert. Somit ergibt sich einerseits im Bereich des Nutgrunds eine definierte Kriech- und Luftstrecke. Andererseits ist es von Vorteil, wenn durch Anlage des Trennkörpers an der Nutisolierung im Bereich des Nutgrunds und an den Vorsprüngen oder der Nutisolierung im Bereich der Vorsprünge, der Trennkörper insgesamt mit einer gewissen, allerdings relativ geringen Vorspannung auch bezüglich der Vorsprünge positioniert ist. Demzufolge ergibt sich auch dort eine definierte Kriech- und Luftstrecke.

Es wird als besonders vorteilhaft angesehen, wenn die Nutisolierung als Flächenisolierstoff, insbesondere als Isolierfolie ausgebildet ist. Dieser Flächenisolierstoff kann auf einfache Art und Weise in die Nut eingebracht werden, vorzugsweise erfolgt dies durch Einstecken in Längsrichtung der Nut. Der Flächenisolierstoff erstreckt sich mindestens über die Länge des Statorteils. Es wird allerdings als bevorzugt angesehen, wenn sich der Flächenisolierstoff auch in die Nuten der Endscheiben hinein erstreckt. Somit ist einerseits eine Isolierung der Nut des Statorteils gewährleistet, andererseits ist der Flächenisolierstoff aufgrund der Umlenkung der Spulenwicklung im Bereich der Endscheiben axial positioniert. Gemäß einer bevorzugten Ausführungsform ist vorgesehen, dass der Flächenisolierstoff am Nutgrund und den beiden Seitenflächen der Nut anliegt. Der Flächenisolierstoff erstreckt sich vorzugsweise in die Bereiche der aufeinander zu gerichteten Vorsprünge. Demzufolge deckt der Flächenisolierstoff im Bereich der jeweiligen Nut die gesamte metallische Oberfläche des Statorteils ab, sowie Teilbereiche der Endscheiben.

Es wird als besonders vorteilhaft angesehen, wenn der Quersteg des Trennkörpers zwischen den aufeinander zu gerichteten Vorsprüngen und dem Flächenisolierstoff angeordnet ist. Es ist damit eine überlappende Anordnung von Flächenisolierstoff und Quersteg des Trennkörpers, somit Phasenisolierung, vorgesehen. Der Quersteg des Trennkörpers kontaktiert hierbei die Vorsprünge des Statorteils.

Gemäß einer bevorzugten Weiterbildung der Erfindung ist vorgesehen, dass eine der Endscheiben eine besondere Gestaltung zum Einführen der jeweiligen den Nuten zugeordneten Trennkörper in das Statorteil und die Endscheiben aufweist. So ist eine der Endscheiben im Bereich deren benachbarten Zähne mit mindestens einer Aussparung versehen, insbesondere weist jeder der benachbarten Zähne eine Aussparung auf. Diese Aussparung dient dem Einsetzen des Trennkörpers im Bereich dieser Endscheibe in die zwischen den Zähnen dieser Endscheibe gebildete Nut, wobei die Einsetzbewegung in Richtung des Nutgrundes gerichtet ist. Eine solche Gestaltung ist insbesondere dann von Vorteil, wenn der Quersteg benachbart einem Ende des Trennkörpers Rücksprünge, insbesondere symmetrisch zum Längssteg Rücksprünge aufweist. In diesem Fall kann der Trennkörper mit seinem Ende, das benachbart der Rücksprünge ist, aber dort keine Rücksprünge aufweist, in die genannte Aussparung der Endscheibe mit der Einsetzbewegung in Richtung des Nutgrunds eingeführt werden und bewegt damit die aufeinander zu gerichteten Enden des Flächenisolierstoffs in Richtung des Nutgrunds. Hierdurch wird Platz zwischen den der jeweiligen Nut zugeordneten Vorsprüngen und den aufeinander zu gerichteten Enden des Flächenisolierstoffs geschaffen, so dass der Trennkörper nun in Längsrichtung des Trennkörpers in die Nut eingeschoben werden kann, durch das Statorteil hindurch, bis in die Nut der anderen Endscheibe. Diese andere Endscheibe ist entsprechend den spezifischen Anforderungen der elektrischen Maschine gestaltet, weist somit die Stromanschlüsse zu den einzelnen Wicklungen auf.

In den Figuren ist die Erfindung anhand einer bevorzugten Ausführungsform darstellt, ohne auf diese beschränkt zu sein. Es zeigt:
- Figur 1: eine perspektivische Ansicht des einen Endes des Stators,
- Figur 2: eine perspektivische Ansicht des anderen Endes des Stators, das mit den elektrischen Anschlüssen versehen ist,
- Figur 3: einen Schnitt durch das Statorteil des Stators, senkrecht zur Längsachse des Statorteils geschnitten,
- Figur 4: in einer perspektivischen Ansicht die Anordnung des Statorteils, der im Bereich des oberen Endes des Stators anzuordnenden Endscheibe sowie der in die Nuten des Statorteils eingesteckten Nutisolierungen,
- Figur 5: eine Draufsicht des bei dem Stator Verwendung findenden Trenn- körpers,
- Figur 6: eine Stirnansicht des in Figur 5 gezeigten Trennkörpers,
- Figur 7: eine Seitenansicht des in den Figuren 5 und 6 gezeigten Trenn- körpers,
- Figur 8: das obere Ende des Stators in einem Zwischenmontageschritt, nach dem Verbinden der im Bereich des oberen Endes des Sta- tors angeordneten Endscheibe und des Statorteils, bei in die Nu- ten von Endscheibe und Statorteil eingesetzten Nutisolierungen sowie gewickelten Zahnspulen,
- Figur 9: einen sich an den in Figur 8 veranschaulichten Montageschritt an- schließenden Montageschritt des Montierens der Trennkörper,
- Figur 10: einen Querschnitt durch das Statorteil, entsprechend der Darstel- lung in Figur 3, allerdings nur für einen Teilkreis des Statorteils veranschaulicht, wobei in eine Nut eine Nutisolierung eingesteckt ist,
- Figur 11: einen Schnitt durch das Statorteil gemäß Figur 10, allerdings ohne die Schnittlinien im Statorteil veranschaulicht, wobei in die Nuten die Nutisolierungen eingelegt und die Zähne mit den Zahnspulen bewickelt sind,
- Figur 12: einen Querschnitt durch die im oberen Bereich des Stators ange- ordnete Endscheibe, veranschaulicht über einen Sektorbereich, mit in die Nuten der Endscheibe eingesetzten Nutisolierungen und die Zähne umgebenden Zahnspulen, bei zwei verschiedenen Montageschritten des Trennkörpers,
- Figur 13: eine Detaildarstellung der rechten Hälfte der in Figur 12, dort rechts dargestellten Nut mit Trennkörper.

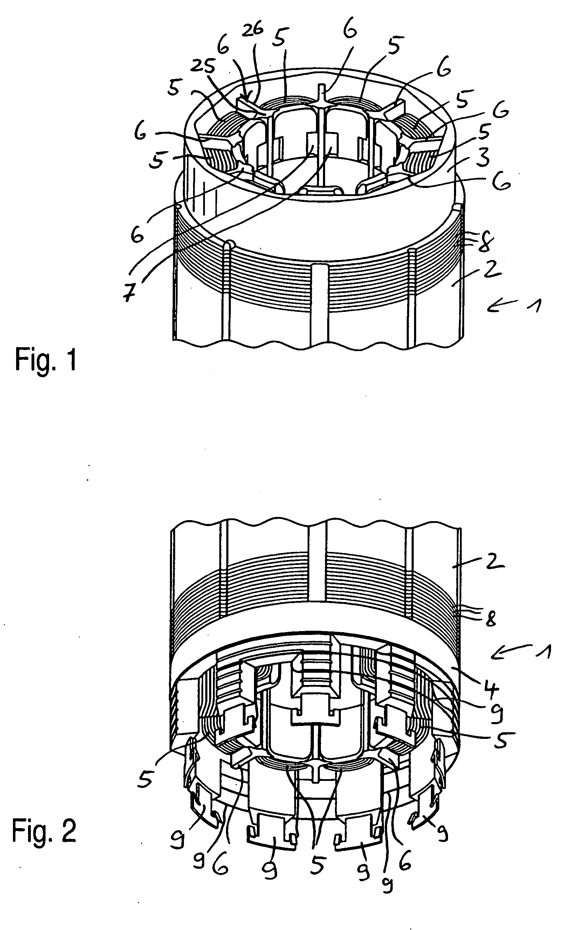

Die Figuren 1 und 2 zeigen den Stator 1 eines Elektromotors, insbesondere eines Drehstrom-Synchronantriebs, wobei die Figur 1 das obere Ende des Stators und die Figur 2 das untere Ende des Stators veranschaulicht.

Der Stator 1 besteht im Wesentlichen aus einem hohlzylindrischen Statorteil 2, einer oberen, ringförmigen Endscheibe 3, einer unteren, ringförmigen Endscheibe 4, neun Zahnspulen 5, zwischen den Zahnspulen angeordneten Phasenisolierungen, die als Trennkörper 6 ausgebildet sind, sowie in die Nuten zwischen den Zähnen des Stators eingebrachten Nutisolierungen, die als Isolierfolien 7 ausgebildet sind.

Das Statorteil 2 besteht aus ferromagnetischem Material, insbesondere ist es als Blechpaket ausgebildet, wobei die einzelnen Bleche 8 miteinander verschweißt, vernietet oder verklebt sind. Durch Schichten einer gewünschten Anzahl von Blechen 8 lässt sich ein Statorteil 2 der jeweils gewünschten Länge erzeugen. Insofern ist in den Figuren 1 und 2 nur das Ober- und das Unterteil des Stators 1 dargestellt worden; die Länge des Statorteils ist beliebig und demzufolge das Statorteil 2 in den Figuren 1 und 2 abgebrochen dargestellt.

Die untere Endscheibe 4 ist gegenüber der oberen Endscheibe 3 modifiziert ausgebildet; die untere Endscheibe 4 weist die Verdrahtung und Stromzuführung 9 der Zahnspulen 5 auf.

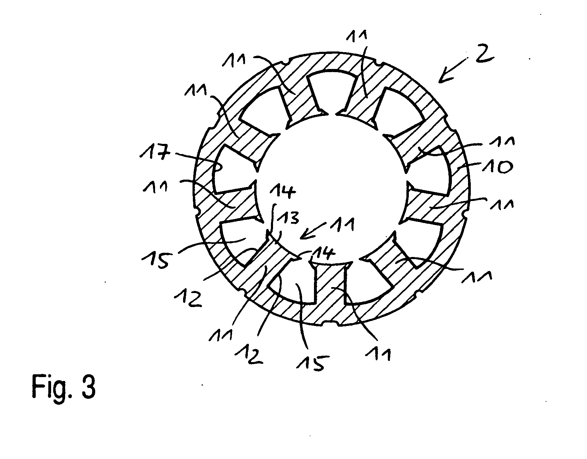

Die Querschnittsgestaltung des Statorteils 2 ergibt sich aus der Figur 3: Das Statorteil 2 weist einen äußeren zylindrischen Mantelabschnitt 10 sowie neun von diesem aus nach innen gerichtete Zähne 11 auf. Der jeweilige Zahn 11 erstreckt sich über die gesamte Länge des Statorteils 2 und weist parallele Wandungsabschnitte 12 sowie im Bereich des dem Mantelabschnitt 10 abgewandten Endes 13 zwei sich tangential erstreckende, voneinander weg gerichtete Vorsprünge 14 auf. Demzufolge ist zwischen zwei benachbarten Zähnen 11 eine Nut 15 gebildet, deren Querschnitt sich zur Achse des Mantelabschnitts 10 konisch verjüngt und sich im Bereich des radial inneren Enden der Nut 15 aufeinander zu gerichtete Vorsprünge 14 benachbarter Zähne 11 befinden. Die Enden 13 der Zähne 11, somit die Stirnflächen der Zähne 11, beschreiben einen Kreis. Der durch diesen gebildete innere Zylinderraum des Statorteils 2 dient der Aufnahme des Rotors des Elektromotors.

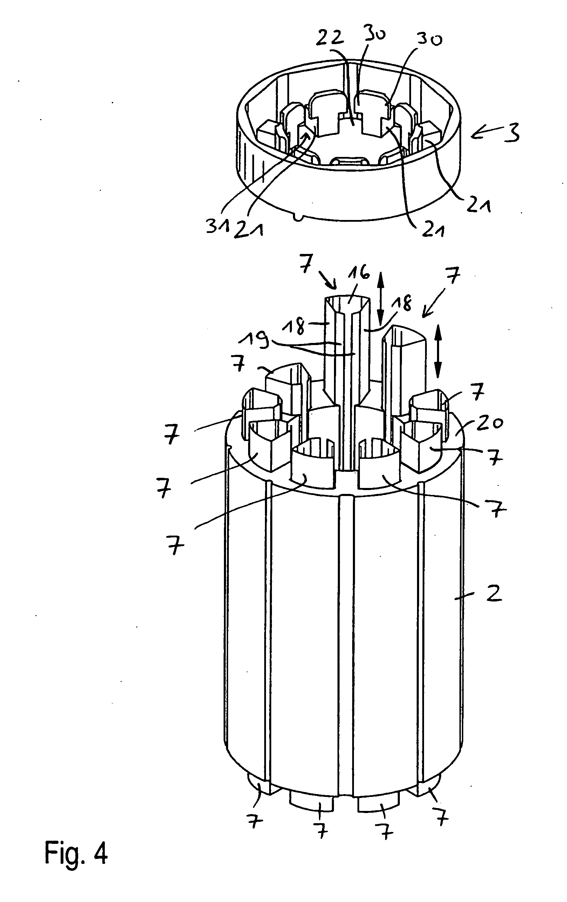

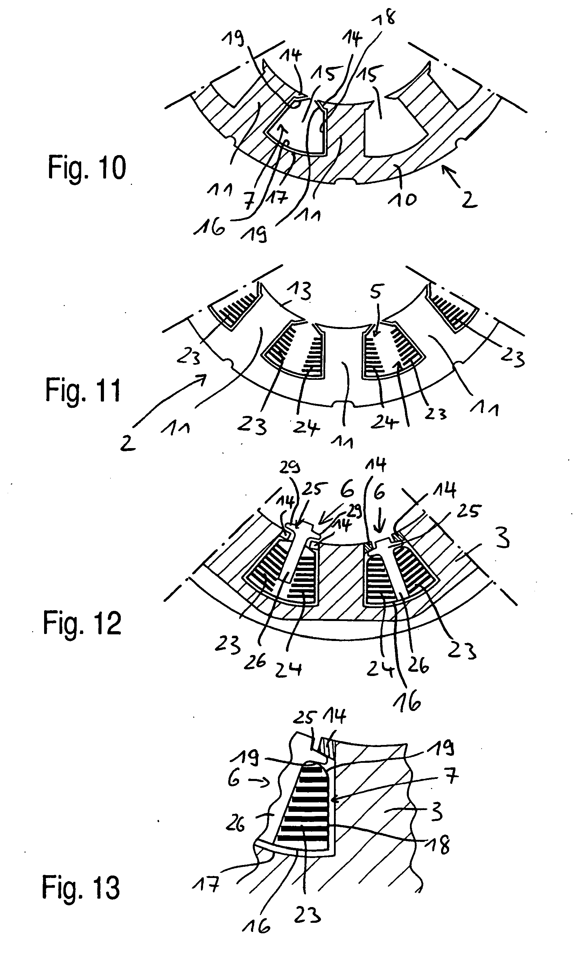

Der Darstellung der Figur 4 ist zu entnehmen, dass die jeweilige Nut 15 des Statorteils 2 der Aufnahme der die Funktion der Nutisolierung aufweisenden Isolierfolie 7 dient. Veranschaulicht sind zwei Isolierfolien 7, die nicht vollständig in deren Endstellung in das Statorteil 2 eingeschoben sind, um so die geometrische Gestaltung der Isolierfolie 7 besser verdeutlichen zu können. Die Isolierfolie ist viermal gefaltet und weist einen Bodenabschnitt 16, der am Nutgrund 17 anliegt, auf, ferner zwei Seitenabschnitte 18, die an den Wandungsabschnitten 12 benachbarter Zähne 11 anliegen, auf, sowie zwei Endabschnitte 19 auf, die an den Vorsprüngen 14 anliegen. Diese Situation ist für eine Isolierfolie 7 in Figur 10 im Schnitt veranschaulicht.

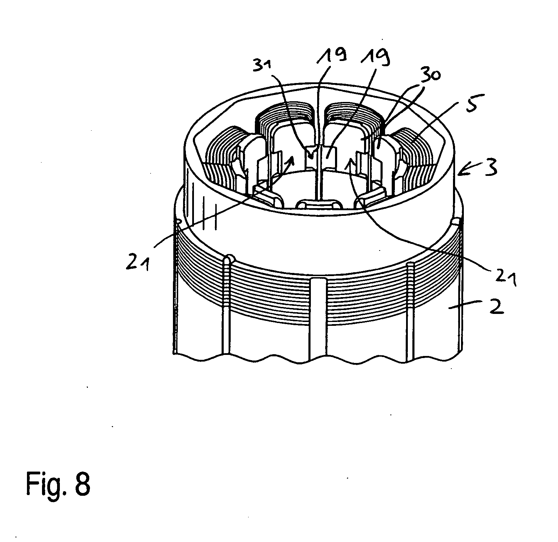

Figur 4 zeigt für die sieben anderen Isolierfolien 7 in deren Endmontagestellung (die beiden anderen Isolierfolien 7 müssen in der einen Richtung der Doppelpfeile weiter eingeschoben werden), in der die beiden Endscheiben 3 und 4 in Anlage mit den Stirnflächen 20 des Statorteils 2 (nur die obere Stirnfläche des Statorteils 2 ist sichtbar) gebracht werden. Beide Endscheiben 3 und 4 weisen gleichfalls jeweils neun Zähne 21 auf (von denen nur die Zähne der oberen Endscheibe 3 sichtbar sind), die identisch den Zähnen 11 des Statorteils 2 ausgebildet sind, aber keine Vorsprünge 14 aufweisen. Somit ist zwischen benachbarten Zähnen 21 der Endscheiben 3 bzw. 4 eine Nut 22 gebildet, die identisch der Nut 15 gebildet ist, aber ohne die Querschnittsverminderung aufgrund der Zähne 14. Somit können die im Bereich der Stirnseiten des Statorteils 2 überstehenden Abschnitte der Isolierfolien 7 in die Nuten 22 der Endscheiben 3 und 4 eingeschoben werden. Anschließend wird der jeweilige Gesamtzahn, der aus dem zentralen Zahn 11 und den Zähnen 21 der Endscheiben 3 und 4 gebildet ist, mit der Wicklung versehen, so dass dort die Zahnspule 5 gebildet ist. Das Wickeln der Zahnspule erfolgt beispielsweise mittels des eingangs genannten Nadelwickelautomats. Bei dem gewickelten Material handelt es sich vorzugsweise um einen Kupferlackdraht. Es wird voll gewickelt, so dass etwa 70 % der Querschnittsfläche der Nut 15 von den Drahtwicklungen eingenommen wird. Jeder. Nut sind somit Spulenabschnitte 23 und 24 benachbarter Zahnspulen 5 zugeordnet. Dieser weitere Zwischenmontageschritt des Stators ist in Figur 8 veranschaulicht. Überdies zeigt Figur 11 diesen Montageschritt, der im Bereich eines Sektors des Statorteils 2 die in die Nuten 15 eingesetzten Isolierfolien und die Spulenabschnitte 23 und 24 verdeutlicht. Diese Spulenabschnitte sind idealisiert dargestellt, in der Realität ist die Wicklung ungleichmäßiger, so dass sich Drahtabschnitte benachbarter Zahnspulen 5 durchaus bei diesem Montagezustand berühren.

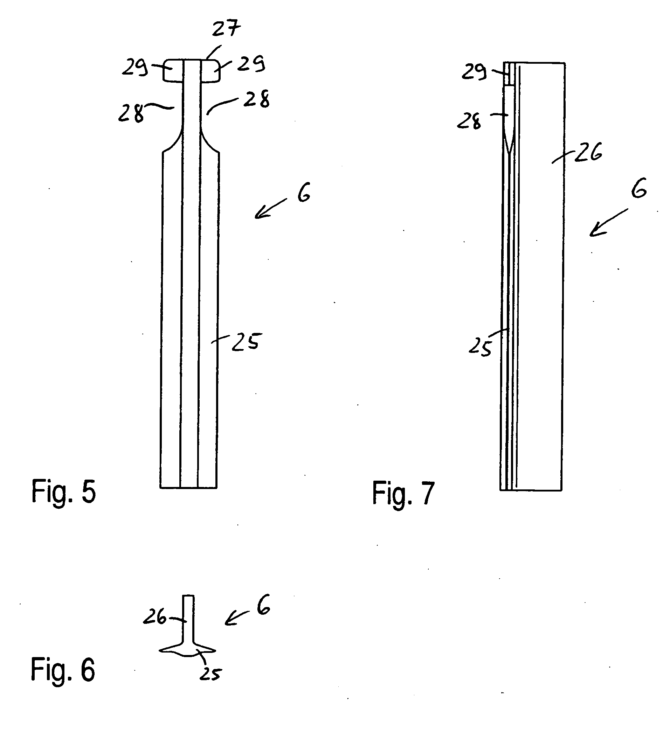

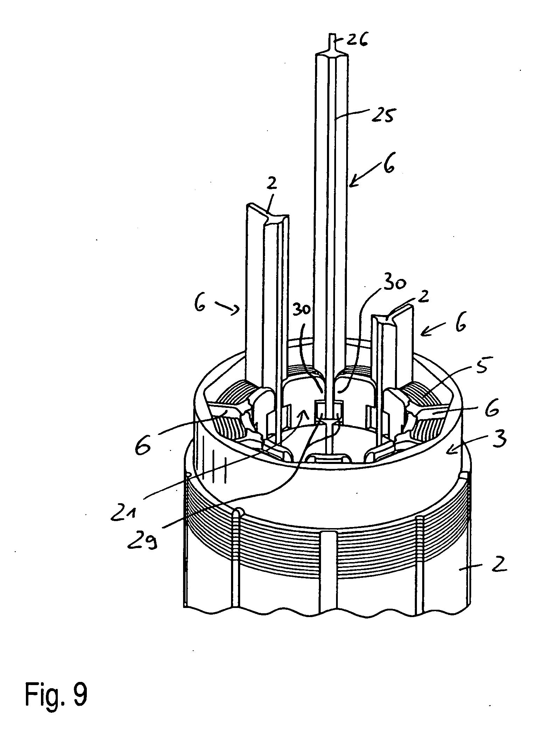

Zum Endmontieren des Stators ist es erforderlich, die Phasenisolierung, somit die Isolierung zwischen den Spulenabschnitten 23 und 24, mittels des jeweiligen Trennkörpers 6 einzubringen. Wie der Darstellung der Figuren 5 bis 7 zu entnehmen ist, weist der Trennkörper 6 einen T-förmigen Querschnitt auf, weist somit einen Quersteg 25 und einen in der Mitte des Querstegs 25 verbundenen Längssteg 26 auf. Die Länge des Längsstegs 26 ist dabei größer als die Länge des Querstegs 25. Der Quersteg 25 weist benachbart einem Ende 27 des Trennkörpers 6, symmetrisch zur Längserstreckung des Längsstegs 26 zwei Rücksprünge 28 auf. Es sind somit im Bereich des Endes 27 des Trennkörpers 6 zwei kurze Querstegflügel 29 gebildet. Montiert wird der jeweilige Trennkörper 6, wie es der Darstellung der Figur 4 oben und der Figur 9 zu entnehmen ist, indem in die zwischen zwei benachbarten Zähnen 21 der Endscheibe 3 gebildete Aussparung 31, die zwischen den Vorsprüngen 30 und der diesen zugewandten stirnseitigen Begrenzung des Statorteils 2 angeordnet ist, der Trennkörper 6 mit seinem Ende, das die beiden Querstegflügel 29 aufweist, eingeführt wird, wobei durch eine Bewegung des jeweiligen Trennkörpers 6, radial nach außen, wie es in Figur 12, links, gezeigt ist, der Längssteg 26 des Trennkörpers 6 zwischen die Spulenabschnitte 23 und 24 eingeführt wird und bei dieser Bewegung radial nach außen die beiden Querstegflügel 29 gegen die Endabschnitte 19 der Isolierfolie 7 bewegt werden. Dies ist deshalb möglich, weil die Endabschnitte 19, bezogen auf das obere Ende des Stators 1, nur an den Vorsprüngen 14 des Statorteils 2 und den Vorsprüngen 30 der Endscheibe 3 anlegen, nicht aber im Bereich der Aussparung 31. Wird der Trennkörper 6 ausreichend weit radial nach außen eingeschoben, bis er den Bodenabschnitt 16 der Isolierfolie 7 kontaktiert, befindet sich der Quersteg 25 sowohl im Bereich der Querstegflügel 29 als auch im verbleibenden Querstegbereich des Trennkörpers 6, geringfügig näher zum Bodenabschnitt 16 der Isolierfolie 7 als die Vorsprünge 30 und 14 von Endscheibe 3 und Statorteil 2. Demzufolge besteht nun die Möglichkeit, den Trennkörper 6 axial einzuschieben, in die in den Figuren 1 und 2 gezeigte Endposition, in der die abgewandten Stirnflächen des jeweiligen Trennkörpers 6 benachbarte Zahnspulen 5 über deren gesamte Länge gegeneinander isolieren, womit dem jeweiligen Trennkörper 6 die Funktion der Phasenisolierung zukommt. Die Querschnittsdarstellung des fertig montierten Trennkörpers 6 ist in Figur 12, rechter Teil und Figur 13 in vergrößerter Darstellung veranschaulicht. In der Figur 12, rechts, sind, zur besseren grafischen Veranschaulichung, die Vorsprünge 14 des Statorteils 2, die nicht in der Schnittebene liegen, mit einer Schraffur veranschaulicht. Dies gilt auch für die Darstellung der Fig. 13. In dieser in der Figur 12 rechts und in der Figur 13 dargestellten Position des Trennkörpers wird dieser axial in die in Figur 9 für die sechs Trennkörper 6 veranschaulichte Endstellung verschoben, in der der Quersteg 25 auf der einen Seite die Vorsprünge 30 und 14 von Endscheibe 3 und Statorteil 2 und auch nicht gezeigte Vorsprünge der Endscheibe 4 kontaktiert und auf der anderen Seite des Querstegs 25 die Isolierfolie 7 im Bereich der Endabschnitte 19 kontaktiert. In der Fig. 9 ist der zentrale Trennkörper 6 in der Montagestellung gezeigt, in der das anfängliche radiale Einsetzen des Trennkörpers 6 erfolgt, die beiden daneben gezeigten Trennkörper 6 sind in unterschiedlichen, teilweise eingeschobenen Zwischenstellungen veranschaulicht, die sechs anderen Trennkörper 6 sind in deren endmontierten Stellung gezeigt.

Aufgrund der erfindungsgemäßen Gestaltung des Stators ist dieser unkompliziert Modifikationen zugänglich. Die Endscheiben 3 und 4 sind universell verwendbar. Die Länge des Stators 1 ergibt sich aus der Länge des Statorteils 2, das durch Packen einer gewünschten Anzahl von Blechen bildbar ist. Das Wickeln erfolgt weitgehend unabhängig von der Länge des Stators. Die Isolierfolie 7 und der Trennkörperr 6 kann entsprechend der Länge des Stators geschnitten werden.

## Patentansprüche

1. Stator (1) einer elektrischen Maschine, wobei das Wicklungssystem des Stators (1) aus Zahnspulen (5) aufgebaut ist, sowie der Stator (1) ein aus ferromagntischem Material bestehendes Statorteil (2) und, im Bereich von zwei Stirnseiten des Statorteils (2), zwei aus Isolierwerkstoff bestehende Endscheiben (3, 4) aufweist, wobei das Statorteil (2) und die Endscheiben (3, 4) Zähne (11, 21) mit dazwischen befindlichen Nuten (15, 22) aufweisen, wobei in jeder Nut (15, 22) Spulenabschnitte (23, 24) benachbarter Zahnspulen (5) angeordnet sind, sowie die jeweilige Nut (15) des Statorteils (2) mit einer Nutisolierung (7) versehen ist und eine Phasenisolierung (6) vorgesehen ist, die zwischen den in der jeweiligen Nut (15, 22) angeordneten Spulenabschnitten (23, 24) positioniert ist, **dadurch gekennzeichnet, dass** die Phasenisolierung (6) der jeweiligen Nut (15, 22) als aus Isolierwerkstoff bestehender stabförmiger Trennkörper (6) mit T-förmigem Querschnitt ausgebildet ist, der sich über die Länge der Nut (15, 22) erstreckt, wobei der Trennkörper (6) einen Quersteg (25) und einen mit der Mitte des Querstegs (25) verbundenen Längssteg (26) aufweist, sowie der Quersteg (25) die radiale Nutöffnung abdeckt und der Längssteg (26) zwischen den Spulenabschnitten (23, 24) der benachbarten Zahnspulen (5) angeordnet ist.

2. Stator nach Anspruch 1, **dadurch gekennzeichnet, dass** der Quersteg (25) die radiale Nutöffnung abdeckt und hierbei die Nutisolierung (7) überlappt.

3. Stator nach Anspruch 1 oder 2, **dadurch gekennzeichnet, dass** die Zähne (11, 21) mit ihren freien Zahnenden radial nach innen gerichtet sind.

4. Stator nach einem der Ansprüche 1 bis 3, **dadurch gekennzeichnet, dass** das Statorteil (2) als Blechpaket ausgebildet ist.

5. Stator nach einem der Ansprüche 1 bis 4, **dadurch gekennzeichnet, dass** mindestens die jeweils benachbarten Zähne (11) des Statorteils (2) im Bereich der freien Enden (13) der Zähne (11) aufeinander zu gerichtete Vorsprünge (14) aufweisen, wobei der Trennkörper (6) mit seinem Quersteg (25) die Vorsprünge (14) auf deren dem Nutgrund (17) zugewandten Seite oder die Nutisolierung (7) im Bereich der Vorsprünge (14) kontaktiert.

6. Stator nach einem der Ansprüche 1 bis 5, **dadurch gekennzeichnet, dass** der Längssteg (26) des jeweiligen Trennkörpers (6) in der diesem Trennkörper (6) zugeordnete Nut (15, 22) die Nutisolierung (7) im Bereich des Nutgrundes (17) kontaktiert.

7. Stator nach einem der Ansprüche 1 bis 6, **dadurch gekennzeichnet, dass** die Nutisolierung (7) als Flächenisolierstoff, insbesondere als Isolierfolie (7) ausgebildet ist.

8. Stator nach Anspruch 7, **dadurch gekennzeichnet, dass** sich der Flächenisolierstoff (7) mindestens über die Länge des Statorteils (2), vorzugsweise in die Nuten (22) der Endscheiben (3, 4) hinein erstreckt.

9. Stator nach Anspruch 7 oder 8, **dadurch gekennzeichnet, dass** der Flächenisolierstoff (7) am Nutgrund (17) und den beiden Seitenflächen (12) der Nut (15, 22) anliegt.

10. Stator nach Anspruch 9, **dadurch gekennzeichnet, dass** der Flächenisolierstoff (7) sich in die Bereiche der aufeinander zu gerichteten Vorsprünge (14) erstreckt.

11. Stator nach Anspruch 10, **dadurch gekennzeichnet, dass** der Quersteg (25) des Trennkörpers (6) zwischen den aufeinander zu gerichteten Vorsprüngen (14) und dem Flächenisolierstoff (7) angeordnet ist.

12. Stator nach einem der Ansprüche 1 bis 11, **dadurch gekennzeichnet, dass** der Trennkörper (6) in die Nut (15, 22) einsteckbar ist.

13. Stator nach einem der Ansprüche 1 bis 12, **dadurch gekennzeichnet, dass** eine der Endscheiben (3) im Bereich deren benachbarten Zähne (21) mindestens eine Aussparung, insbesondere jeder benachbarte Zahn (21) eine Aussparung (31) zum Einsetzen des Trennkörpers (6) in die zwischen den Zähnen (21) gebildete Nut (22) aufweist, wobei die Einsetzbewegung in Richtung des Nutgrundes (17) gerichtet ist.

14. Stator nach einem der Ansprüche 1 bis 13, **dadurch gekennzeichnet, dass** der Quersteg (25) benachbart einem Ende (27) des Trennkörpers (6) Rücksprünge (28), insbesondere symmetrisch zum Längssteg (26) Rücksprünge (28) aufweist.

15. Stator nach einem der Ansprüche 1 bis 14, **dadurch gekennzeichnet, dass** der Stator (1) Stator eines Elektromotors, insbesondere eines Drehstrom-Synchronantriebs ist.

## Claims

1. Stator (1) of an electrical machine, the winding system of the stator (1) comprising tooth-wound coils (5), and the stator (1) having a stator part (2) which is made from a ferromagnetic material and, in the region of two end sides of the stator part (2), two end plates (3, 4) made from an insulating material, the stator part (2) and the end plates (3, 4) having teeth (11, 21) with slots (15, 22) located therebetween, with coil sections (23, 24) of adjacent tooth-wound coils (5) being arranged in each slot (15, 22), and the respective slot (15) of the stator part (2) being provided with slot insulation (7) and phase insulation (6), which is positioned between the coil sections (23, 24) arranged in the respective slot (15, 22), **characterized in that** the phase insulation (6) of the respective slot (15, 22) is in the form of a bar-shaped separating element (6) which is made from an insulating material, has a T-shaped cross section and extends over the length of the slot (15, 22), the separating element (6) having a transverse web (25) and a longitudinal web (26), which is connected to the centre of the transverse web (25), and the transverse web (25) covering the radial slot opening, and the longitudinal web (26) being arranged between the coil sections (23, 24) of the adjacent tooth-wound coils (5).

2. Stator according to Claim 1, **characterized in that** the transverse web (25) covers the radial slot opening and in the process overlaps the slot insulation (7).

3. Stator according to Claim 1 or 2, **characterized in that** the free tooth ends of the teeth (11, 21) point radially inwards.

4. Stator according to one of Claims 1 to 3, **characterized in that** the stator part (2) is in the form of a laminate stack.

5. Stator according to one of Claims 1 to 4, **characterized in that** at least the respectively adjacent teeth (11) of the stator part (2) have projections (14) which point towards one another in the region of the free ends (13) of the teeth (11), the transverse web (25) of the separating element (6) making contact with the projections (14) on that side of said projections which faces the slot base (17) or with the slot insulation (7) in the region of the projections (14).

6. Stator according to one of Claims 1 to 5, **characterized in that** the longitudinal web (26) of the respective separating element (6) makes contact with the slot insulation (7) in the region of the slot base (17) **in that** slot (15, 22) which is associated with this separating element (6).

7. Stator according to one of Claims 1 to 6, **characterized in that** the slot insulation (7) is in the form of an insulating sheet, in particular in the form of an insulating film (7).

8. Stator according to Claim 7, **characterized in that** the insulating sheet (7) extends at least over the length of the stator part (2), preferably into the slots (22) of the end plates (3, 4).

9. Stator according to Claim 7 or 8, **characterized in that** the insulating sheet (7) rests on the slot base (17) and the two side faces (12) of the slot (15, 22).

10. Stator according to Claim 9, **characterized in that** the insulating sheet (7) extends into the regions of the projections (14) which point towards one another.

11. Stator according to Claim 10, **characterized in that** the transverse web (25) of the separating element (6) is arranged between the projections (14), which point towards one another, and the insulating sheet (7).

12. Stator according to one of Claims 1 to 11, **characterized in that** the separating element (6) can be inserted into the slot (15, 22).

13. Stator according to one of Claims 1 to 12, **characterized in that** one of the end plates (3) has, in the region of its adjacent teeth (21), at least one cutout, in particular each adjacent tooth (21) has a cutout (31) for inserting the separating element (6) into the slot (22) formed between the teeth (21), the insertion movement being aligned in the direction of the slot base (17).

14. Stator according to one of Claims 1 to 13, **characterized in that** the transverse web (25) has recesses (28) adjacent to one end (27) of the separating element (6), in particular recesses (28) symmetrically with respect to the longitudinal web (26).

15. Stator according to one of Claims 1 to 14, **characterized in that** the stator (1) is the stator of an electric motor, in particular a three-phase synchronous drive.

## Revendications

1. Stator (1) d'une machine électrique, dans lequel le système d'enroulement du stator (1) est constitué de bobines dentées (5), et le stator (1) présente une partie de stator (2) constituée de matériau ferromagnétique, et dans la région de deux côtés frontaux de la partie de stator (2), présente deux disques d'extrémité (3, 4) constitués de matériau isolant, la partie de stator (2) et les disques d'extrémité (3, 4) présentant des dents (11, 21) avec des rainures (15, 22) situées entre elles, des portions de bobine (23, 24) de bobines dentées adjacentes (5) étant disposées dans chaque rainure (15, 22), et la rainure respective (15) de la partie de stator (2) étant pourvue d'une isolation de rainure (7) et une isolation de phase (6) étant prévue, laquelle est positionnée entre les portions de bobine (23, 24) disposées dans la rainure respective (15, 22), **caractérisé en ce que** l'isolation de phase (6) de la rainure respective (15, 22) est réalisée sous forme de corps de séparation en forme de barre (6) constitué de matériau isolant avec une section transversale en forme de T, qui s'étend sur la longueur de la rainure (15, 22), le corps de séparation (6) présentant une nervure transversale (25) et une nervure longitudinale (26) connectée au milieu de la nervure transversale (25) la nervure transversale (25) recouvrant l'ouverture de rainure radiale et la nervure longitudinale (26) étant disposée entre les portions de bobine (23, 24) des bobines dentées adjacentes (5).

2. Stator selon la revendication 1, **caractérisé en ce que** la nervure transversale (25) recouvre l'ouverture de rainure radiale et chevauche dans ce cas l'isolation de rainure (7).

3. Stator selon la revendication 1 ou 2, **caractérisé en ce que** les dents (11, 21) sont orientées radialement vers l'intérieur avec leurs extrémités de dents libres.

4. Stator selon l'une quelconque des revendications 1 à 3, **caractérisé en ce que** la partie de stator (2) est réalisée sous forme de paquet de tôles.

5. Stator selon l'une quelconque des revendications 1 à 4, **caractérisé en ce qu'**au moins les dents adjacentes respectives (11) de la partie de stator (2) présentent, dans la région des extrémités libres (13) des dents (11), des saillies (14) pouvant être orientées l'une vers l'autre, le corps de séparation (6) venant en contact avec sa nervure transversale (25) avec les saillies (14) sur son côté tourné vers le fond de rainure (17) ou venant en contact avec l'isolation de rainure (7) dans la région des saillies (14).

6. Stator selon l'une quelconque des revendications 1 à 5, **caractérisé en ce que** la nervure longitudinale (26) du corps de séparation respectif (6) vient en contact dans la rainure (15, 22) associée à ce corps de séparation (6) avec l'isolation de rainure (7) dans la région du fond de rainure (17).

7. Stator selon l'une quelconque des revendications 1 à 6, **caractérisé en ce que** l'isolation de rainure (7) est réalisée sous forme de matière isolante de surface, notamment sous forme de film isolant (7).

8. Stator selon la revendication 7, **caractérisé en ce que** la matière isolante de surface (7) s'étend au moins sur la longueur de la partie de stator (2), de préférence dans les rainures (22) des disques d'extrémité (3, 4).

9. Stator selon la revendication 7 ou 8, **caractérisé en ce que** la matière isolante de surface (7) s'applique contre le fond de rainure (17) et les deux surfaces latérales (12) de la rainure (15, 22).

10. Stator selon la revendication 9, **caractérisé en ce que** la matière isolante de surface (7) s'étend dans les régions des saillies (14) pouvant être orientées l'une vers l'autre.

11. Stator selon la revendication 10, **caractérisé en ce que** la nervure transversale (25) du corps de séparation (6) est disposée entre les saillies (14) pouvant être orientées l'une vers l'autre, et la matière isolante de surface (7).

12. Stator selon l'une quelconque des revendications 1 à 11, **caractérisé en ce que** le corps de séparation (6) peut être enfoncé dans la rainure (15, 22).

13. Stator selon l'une quelconque des revendications 1 à 12, **caractérisé en ce que** les disques d'extrémité (3) présentent, dans la région des dents adjacentes (21), au moins un évidement, en particulier chaque dent adjacente (21) présente un évidement (31) pour insérer le corps de séparation (6) dans la rainure (22) formée entre les dents (21), le mouvement d'insertion étant orienté dans la direction du fond de rainure (17).

14. Stator selon l'une quelconque des revendications 1 à 13, **caractérisé en ce que** la nervure transversale (25) présente, à proximité d'une extrémité (27) du corps de séparation (6), des retraits (28), en particulier des retraits (28) symétriques par rapport à la nervure longitudinale (26).

15. Stator selon l'une quelconque des revendications 1 à 14, **caractérisé en ce que** le stator (1) est le stator d'un moteur électrique, notamment d'un entraînement synchrone triphasé.
